# EUROPEAN PATENT APPLICATION

(11) **EP 1 615 452 A2**
(43) Date of publication of application: **11.01.2006**
(21) Application number: 05106225.5
(22) Date of filing: 07.07.2005
(51) Int. Cl.: H04N 9/73

(54) **Still image photography**

(30) Priority: 08.07.2004 KR 2004052850
(71) Applicant: SAMSUNG ELECTRONICS CO., LTD., Suwon-si, Gyeonggi-do (KR)
(72) Inventor: Chun, Hong-gi 104-1602 Jugong Green Ville Apt., Gyeonggi-do (KR)
(74) Representative: Geary, Stuart Lloyd

(57) **Abstract**

A still image photographing method for reproducing a colour sense suitable for an indoor and outdoor environments and a photographing apparatus thereof are provided. The photographing method includes the steps of commanding a image photographing apparatus to photograph a still image; controlling an amount an aperture arranged on the apparatus is opened depending on incident light and determining whether the photographing is being captured indoors or outdoors depending upon the amount the aperture is opened; and controlling the apparatus so that photographing of the still image is based upon predetermined data set in advance that is suitable for the determined environment.

## Description

The present invention relates to a method for photographing a still image, and to photographic apparatus.

A typical camcorder may function as a video cassette recorder for recording moving objects on a video tape, or as a general camera for stills photography.

Using the camcorder, a user may view recorded images using a viewfinder and a liquid crystal display monitor. Moreover, a user may view recorded images using an externally connected display device such as a television monitor.

In conventional camcorders, the same data associated with colour sensing is used for both indoor and outdoor photography. Since the same data is used in both indoor and outdoor environments, green is prevalent over a whole image that is captured indoors. However, this can cause a problem because the colour sensing for the image captured indoors is not optimal.

For example, when taking a photograph of an object using a camcorder under artificial light indoors, green colour sensing is usually reduced on the still image. Therefore, if a photograph is captured outdoors after the colour sensing is controlled to reduce green colour sensing for indoor use, green is then under represented in the photograph.

On the contrary, if a user sets colour sensing related data so that a green colour sensing is well represented outdoors for an object such as a green leaf, green colour sense for an indoor photograph is over represented in the still image.

Consequently, there is typically a colour sensing differential for indoor and outdoor use.

Accordingly, there is a need for an apparatus which provides colour sensing suitable for both indoor and outdoor use.

According to a first aspect of the invention, there is provided a method for photographing a still image, the method comprising:
using a measure of the amount of incident light to control the size of an aperture;
using the size of the aperture to determine the environment in which the still image is being photographed; and
choosing a predetermined data set suitable for the determined environment.

According to a second aspect of the invention, there is provided photographic apparatus comprising:
an operation block for commanding photographing of a still image;
an aperture openable and closable depending on incident light; and
a camera microcomputer for determining whether the still image is located in an indoor or outdoor environment depending upon the amount the aperture is opened, and for controlling capturing of a still image on the basis of predetermined data that is suitable for the determined environment.

According to a third aspect of the invention, there is provided still image photographing method for reproducing a color sense suitable for indoor and outdoor environments comprising the steps of:
commanding a image photographing apparatus to photograph a still image;
controlling an amount an aperture arranged on the apparatus is opened depending on incident light;
determining whether the photographing is being captured indoors or outdoors depending upon the amount the aperture is opened; and
controlling the apparatus so that photographing of the still image is based upon predetermined data set in advance that is suitable for the determined environment.

According to a fourth aspect of the invention, there is provided photographing apparatus comprising:
an operation block for commanding photographing of a still image;
an aperture configured to open and close a predetermined amount depending on incident light; and
a camera microcomputer for determining whether the still image is located in an indoor or outdoor environment depending upon the amount the aperture is opened, the camera microcomputer controls the photographing of the still image on the basis of predetermined data set in advance that is suitable for the determined environment.

Aims, advantages, and salient features of the invention will become apparent to those skilled in the art from the following detailed description, which, taken in conjunction with the annexed drawings, discloses preferred embodiments of the invention.

Embodiments of the present invention will be apparent from the following description taken in conjunction with the accompanying drawings, in which:
Figure 1 is a block diagram illustrating an embodiment of apparatus for photographing a still image, according to the invention; and
Figure 2 is a flowchart illustrating operation of the Figure 1 photographing apparatus.

Throughout the drawings, the same reference numerals refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

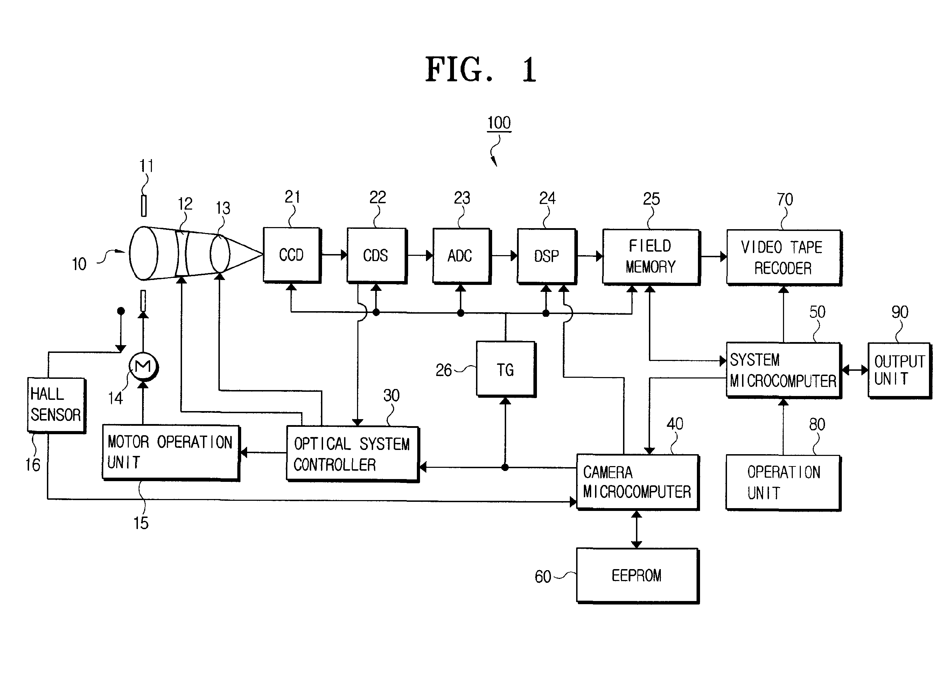

Figure 1 is a block diagram illustrating the construction of a photographing apparatus, for example a camcorder. Conventional camcorders generally include a digital video camera and a video tape recorder. The digital video camera processes image data photographed on a charged coupled device (CCD) 21 to record the processed data on a video tape recorder 70. Then, the processed data is transmitted to a personal computer (PC) (not shown) or is displayed on an output unit 90.

A lens system 10 includes an aperture 11, a zoom lens 12, and a focus lens 13. The aperture 11 controls the amount of light received by the camera.

The size of the aperture 11 is controlled by a motor 14. The motor 14 is operated by a motor operation unit 15. The size of the aperture 11 is detected by a Hall sensor 16 and is determined using the Hall voltage, applied to a camera microcomputer 40, from the Hall sensor 16. An optical system controller 30 performs auto exposure and auto focus procedures to control the aperture 11 and focus of a lens.

Optical information provided to the lens system 10 is then provided to the CCD 21. The CCD 21 is an image pickup element. The CCD 21 converts optical information into an electrical signal. The electrical signal converted by the CCD 21 is provided to a correlated double sampling (CDS) unit 22.

The CDS 22 samples and amplifies an electrical signal received from the CCD 21. An analogue signal double-sampled by the CDS 22 is provided to an analogue-digital converter (ADC) 23.

The ADC 23 converts the analogue signal double-sampled by the CDS 22 into a digital signal. The digital signal converted by the ADC 23 is provided to a digital signal processor (DSP) 24.

The DSP 24 separates the digital signal provided by the ADC 23 into a brightness signal Y and a colour signal C. The DSP 24 applies a predetermined process to the brightness signal Y and the colour signal C and outputs the signals. The resultant digital signals are provided to a field memory 25 when photographing a still image. The digital signals are provided to the video tape recorder 70 via the field memory 25 when photographing a moving image. The video tape recorder 70 then records the output of the DSP 24 on a magnetic tape.

The CCD 21, CDS 22, ADC 23, DSP 24, and field memory 25 are each connected to a timing generator 26, and perform a predetermined process in response to a clock pulse and a synchronization signal each provided by the timing generator 26.

The camera microcomputer 40 sets parameters of the DSP 24 and the timing generator 26 suitable for both indoor and outdoor environments. These parameters are set using colour sensing related coefficient and control values set in advance. The parameters are stored in an electrically erasable, programmable, read-only memory (EEPROM) 60. The camera microcomputer 40 performs focus and aperture controls using image signal data detected by the DSP 24.

A Hall voltage critical value, which is used as a reference in determining the location the camcorder, is also stored in the EEPROM 60.

The system microcomputer 50 controls operation of the camcorder 100. The system microcomputer 50 controls a variety of functions such as recording, playing, and zooming in accordance with an operation of a user. An operation unit 80 instructs operations such as photographing a moving image or a still image. The operation unit 80 also performs an operation for changing the position of the zoom lens 12.

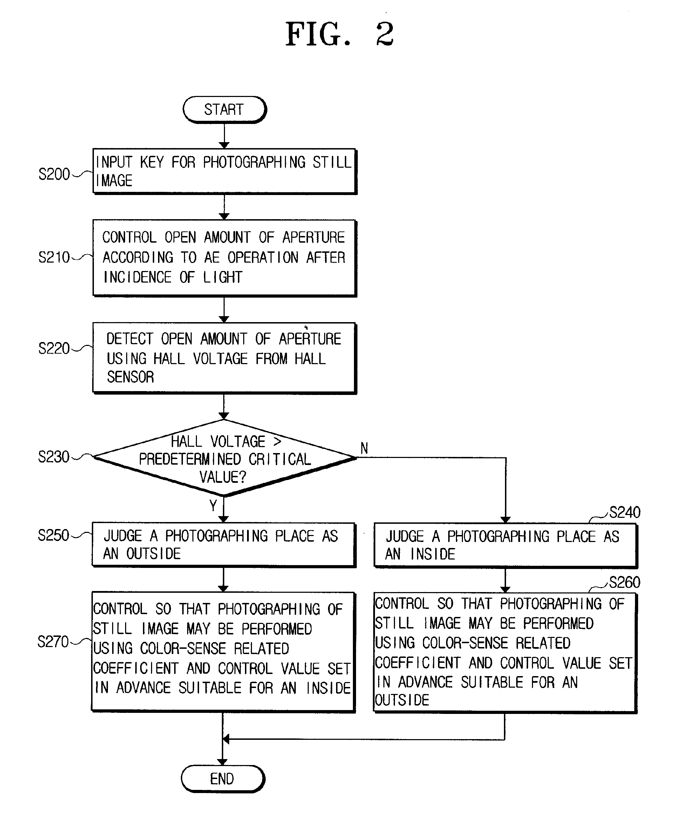

Referring to Figure 2, operation of the photographing apparatus will now be described. First, a user commands a photograph of a still image by pressing a key for photographing a still image on the operation unit 80 (S200). If a photographing operation of a still image starts, the camera microcomputer 40 controls the motor operation unit 15 to operate the motor 14. Thus, the aperture 11 is opened by a default amount.

If light is provided to the lens system 10, the size of the aperture 11 is controlled by a general auto exposure operation (S210). That is, the aperture 11 is controlled so as to close under a bright conditions and to open under dark conditions.

At this point, the size of the aperture 11 is detected by the Hall sensor 16 and is represented in the form of a Hall voltage provided at the output of the Hall sensor 16 (S220).

The Hall voltage 16 is fed back to the camera microcomputer 40. The camera microcomputer 40 compares the size of the provided Hall voltage with a predetermined critical value (S230). Therefore, it is possible to recognize the brightness of an environment where photographing is taking place, by comparing the Hall voltage's size with the predetermined critical value. This information may be used to evaluate whether the camcorder 100 is inside or outside.

Since incident light is strong under outside sunlight, the aperture 11 is closed and thus the Hall voltage is lowered. On the contrary, since incident light is weak under artificial light inside, the Hall voltage is increased.

If the size of the Hall voltage provided by the Hall sensor 16 is smaller than a predetermined critical value stored in the EEPROM 60, the camera microcomputer 40 determines that the photograph is being taken outside (S240). If the size of the Hall voltage provided by the Hall sensor 16 is larger than the predetermined critical value stored in the EEPROM 60, the camera microcomputer 40 determines that the photograph is being taken inside (S250). The predetermined critical value stored in the EEPROM 60 can be changed by a user.

If the size of Hall voltage is smaller than the predetermined critical value, indicating that the camcorder 100 is being used outside, the camera microcomputer 40 controls the photographing of a still image to be performed using colour sensing related coefficient and control values that are set in advance, and are suitable for outside conditions (S260).

That is, the camera microcomputer 40 reads the colour sensing related coefficient and control values from the EEPROM 60. Then, the camera microcomputer 40 provides the coefficient and control values to a predetermined register assigned to the DSP 24. Here, outside conditions means conditions where the camcorder 100 maybe be properly used under sunlight.

The DSP 24 performs image processing using the colour-sensing related coefficient and control values. The values are provided by the camera microcomputer 40 to generate digital brightness and colour signals. The digital signals are provided to the field memory 25.

If the size of the Hall voltage is larger than the predetermined critical value, indicating that the camcorder 100 is being used inside, the camera microcomputer 40 controls the apparatus in such a way that photographing of a still image is performed using colour-sensing related coefficient and control values, set in advance, suitable for inside conditions (S270).

The camera microcomputer 40 reads colour-sensing related coefficient and control values, set in advance, suitable for inside conditions from the EEPROM 60. The camera microcomputer 40 provides the coefficient and control values to a predetermined register assigned to the DSP 24. Here, inside conditions means conditions where the camcorder 100 can be properly used under artificial light.

The DSP 24 performs image processing using the colour-sensing related coefficient and control values suitable for inside conditions. The values are provided from the camera microcomputer 40, to provide digital brightness and colour signals to the field memory 25.

Inside and outside conditions are different, and controls are varied, because of the spectral characteristics of light. The spectral characteristics are different for artificial light in indoor circumstances and sunlight in outdoor circumstances.

The system microcomputer 50 repeatedly reads data stored in the field memory 25 and displays the data on the output unit 90. Therefore, a user can check a still image using the output unit 90 mounted on the camcorder 100.

As described above, the still image photographing method has the advantage of discriminating whether a place where the camcorder is currently used is inside or outside. Then, the apparatus photographs an object using colour sensing suitable for the relevant circumstance. Therefore, it is possible to prevent an instance where green is excessively represented on an image captured indoors, or green is underrepresented on an image captured outdoors.

While the invention has been shown and described with reference to certain embodiments thereof, it will be understood by those skilled in the art that various changes in form and details may be made therein without departing from scope of the invention as defined by the appended claims.

## Claims

1. A method for photographing a still image, the method comprising:
using a measure of the amount of incident light to control the size of an aperture;
using the size of the aperture to determine the environment in which the still image is being photographed; and
choosing a predetermined data set suitable for the determined environment.

2. A method as claimed in claim 1, wherein the predetermined data is colour-sensing data.

3. A method as claimed in claim 1, wherein the step of using the size of the aperture comprises:
using the size of the aperture to determine whether the still image is being photographed inside or outside.

4. A method as claimed in any preceding claim, comprising detecting the aperture size using a sensor.

5. A method according to claim 4, wherein the sensor is a Hall sensor providing a Hall voltage, and the method comprises comparing the Hall voltage to a threshold to determine the environment.

6. The method according to claim 5, wherein the threshold is settable by a user.

7. Photographic apparatus comprising:
an operation block for commanding photographing of a still image;
an aperture openable and closable depending on incident light; and
a camera microcomputer for determining whether the still image is located in an indoor or outdoor environment depending upon the amount the aperture is opened, and for controlling capturing of a still image on the basis of predetermined data that is suitable for the determined environment.

8. Apparatus according to claim 7, further comprising:
a sensor for converting the detected opened amount of the aperture into a predetermined voltage,
wherein the camera microcomputer compares the predetermined voltage with a predetermined critical value and determines that the photographing is being captured outdoors if the predetermined voltage is smaller than the predetermined critical value and determines that the photographing is being captured indoors if the predetermined voltage is larger than the predetermined critical value.

9. Apparatus according to claim 8, wherein the sensor is a Hall sensor.

10. A still image photographing method for reproducing a color sense suitable for indoor and outdoor environments comprising the steps of:
commanding a image photographing apparatus to photograph a still image;
controlling an amount an aperture arranged on the apparatus is opened depending on incident light;
determining whether the photographing is being captured indoors or outdoors depending upon the amount the aperture is opened; and
controlling the apparatus so that photographing of the still image is based upon predetermined data set in advance that is suitable for the determined environment.

11. The method according to claim 10, wherein the step of determining whether the photographing is being captured indoors or outdoors comprises the steps of:
detecting the opened amount of the aperture using a predetermined sensor, and converting the detected opened amount into a predetermined voltage ;
comparing the predetermined voltage with a predetermined critical value so that if the predetermined voltage is smaller than the predetermined critical value as a result of the comparison, it is determined that the photographing is being captured outdoors; and
if the predetermined voltage is larger than the predetermined critical value as a result of the comparison, it is determined that the photographing is being captured indoors.

12. The method according to claim 10, wherein the predetermined data is color-sense related data.

13. The method according to claim 11, wherein the predetermined sensor is a Hall sensor and the predetermined voltage is a Hall voltage which is outputted from the Hall sensor.

14. The method according to claim 11, wherein the predetermined critical value is changeable by a user.

15. A photographing apparatus comprising:
an operation block for commanding photographing of a still image;
an aperture configured to open and close a predetermined amount depending on incident light; and
a camera microcomputer for determining whether the still image is located in an indoor or outdoor environment depending upon the amount the aperture is opened, the camera microcomputer controls the photographing of the still image on the basis of predetermined data set in advance that is suitable for the determined environment.

16. The apparatus according to claim 15, further comprising:
a predetermined sensor for converting the detected opened amount of the aperture into a predetermined voltage ,
wherein the camera microcomputer compares the predetermined voltage with a predetermined critical value and determines that the photographing is being captured outdoors if the predetermined voltage is smaller than the predetermined critical value and determines that the photographing is being captured indoors if the predetermined voltage is larger than the predetermined critical value.

17. The apparatus according to claim 16, wherein the predetermined sensor is a Hall sensor.

18. The apparatus according to claim 7 or claim 16, further comprising: an EEPROM (electronically eraseable programmable read-only memory) for storing a predetermined data set in advance suitable for indoor and outdoor environments, and a predetermined critical value.

19. The apparatus according to claim 18, wherein the predetermined data is color-sense related data.

20. The apparatus according to claim 19, wherein the predetermined critical value is changeable by a user.
